## Europäisches Patentamt

## European Patent Office

## Office européen des brevets

(19)

(11) Numéro de publication: **0 038 774 B1**

(12)

# FASCICULE DE BREVET EUROPEEN

(45) Date de publication du fascicule du brevet:
**12.09.84**

(51) Int. Cl.³: **F 16 D 69/02**

(21) Numéro de dépôt: **81810122.2**

(22) Date de dépôt: **26.03.81**

(54) **Garniture de friction pour frein à friction.**

(30) Priorité: **17.04.80 CH 2979/80**
**22.05.80 FR 8011645**

(43) Date de publication de la demande:
**28.10.81 Bulletin 81/43**

(45) Mention de la délivrance du brevet:
**12.09.84 Bulletin 84/37**

(84) Etats contractants désignés:
**DE GB IT**

(56) Documents cités:
**DE - A - 1 780 271**
**FR - A - 1 241 177**
**FR - A - 2 021 544**
**FR - A - 2 405 397**
**GB - A - 1 204 574**

(73) Titulaire: **SEITZ S.A., CH-2416 Les Brenets (CH)**

(72) Inventeur: **Juvet, Claude Michel, Nouveau Stand 6,
CH-2114 Fleurier (CH)**

(74) Mandataire: **Schneider, Jürg, c/o Société Générale de
l'Horlogerie Suisse S.A. ASUAG Faubourg du Lac 6,
CH-2501 Bienne (CH)**

ACTORUM AG

## Description

L'invention concerne les garnitures de friction pour des freins à friction du type freins à disques ou freins à tambour.

Dans les freins à friction, les garnitures de friction disposées, sur les mâchoires de serrage formant l'étrier ou sur les sabots, sont le plus souvent constituées par des fibres comprimées auxquelles est ajouté un liant permettant la mise en forme de ces garnitures selon le type de frein.

En particulier la plupart de ces garnitures comportent essentiellement comme fibres des fibres d'amiante. Ce matériau, aux qualités mécaniques de tenue en température bien connues, ne permet cependant pas, du fait de la nécessité de présence du liant pour former la garniture, d'obtenir une efficacité de freinage constante au cours du freinage, un phénomène d'evanescence du coefficient de frottement de la garniture sur le disque ou sur le tambour, phénomène analogue à un phénomène de fading se produisant lors de l'échauffement de la garniture et du disque ou du tambour au cours de freinage dans des conditions sévères.

De plus, au cours de l'utilisation à long terme de ce type de garnitures, en particulier dans le cas des freins à disques, l'usure du disque de frein se manifeste par un creusage des faces planes du disque de frein au niveau des zones de contact de ces faces et des garnitures de frein.

Ce phénomène d'usure de disque de frein peut être attribué au frottement des garnitures sur les faces du disque, frottement provoquant, par une usure plus rapide des garnitures de frein, l'émission de particules de fibres hautement abrasives. En particulier lors de la présence de fibres d'amiante dans les garnitures de frein, l'amiante ayant un coefficient de dureté compris entre 6 et 7 selon l'échelle MOHS, les particules d'amiante détachées des garnitures provoquent à plus long terme l'usure du disque de frein, les disques de frein classiques, habituellement obtenus par coulage de fonte d'acier et par usinage par enlèvement de copeaux présentant un coefficient de dureté inférieur.

D'autres solutions ont été proposées à ce jour en vue de la mise en œuvre de garnitures de friction résistantes à l'usure, les particut les d'amiante, étant de plus réputées cancérogènes.

Par exemple, la demande de brevet français no 2 021 544 propose de réaliser des garnitures de friction en céramique d'alumine, formant des secteurs annulaires à surface de frottement importante. Toutefois, la céramique d'alumine, obtenue par frittage, est une matière non seulement fragile, mais composite et poreuse, ce qui facilite également l'arrachement de particules d'alumine en cours de freinage, ces particules accélérant à leur tour l'abrasion de la pièce de frottement prévue pour s'appliquer contre les garnitures. Pour obtenir une longue durée de vie, ce document précise que les deux surfaces ou frottement l'une sur l'autre doivent être réalisées en céramique d'alumine.

Le brevet britannique no 1 204 574 décrit également l'utilisation d'éléments en céramique. Ces derniers ne sont pas utilisés comme garnitures de frottement dans des freins, mais pour leur propriété de résistance à l'usure et de glissement notamment dans des machines à sous.

Aucun de ces documents ne suggère de remplacer la céramique d'alumine d'une garniture de freinage par du corindon monocristallin présentant une rugosité relativement importante, alors qu'il est utilisé habituellement à l'état parfaitement poli pour ses qualités de glissement c'est-à-dire pour réaliser la fonction opposée. Grâce aux qualités mécaniques extrêmes du corindon monocristallin, les surfaces de frottement peuvent être notablement diminuées, de même que l'usure des surfaces contre lesquelles elles s'appliquent.

La présente invention a pour but de remédier aux inconvénients précités.

– Un objet de la présente invention est la mise en œuvre d'une garniture de friction pour frein à friction à usure très faible.

– Un autre objet de la présente invention est la mise en œuvre d'une garniture de friction pour frein à friction de réalisation simple et ne nécessitant pas d'entretien ultérieur.

– Un autre objet de la présente invention est la mise en œuvre d'une garniture de friction permettant une bonne isolation thermique de l'étrier de frein et des circuits hydrauliques de commande.

– Un autre objet de la présente invention est la mise en œuvre d'une garniture de friction de coefficient de frottement sensiblement constant en fonction des températures habituelles d'utilisation des freins.

La garniture de friction pour frein à friction selon l'invention, comportant une pièce de support comprenant une surface munie d'une pluralité de zones de frottement en matériau dur, est caractérisée en ce que les zones de frottement sont constituées par des pastilles de corindon monocristallin fixées sur la surface de la pièce support, chaque pastille comportant une face plane constituant une zone de frottement, chaque face plane ayant une rugosité moyenne de 2 à 3 μm.

De telles garnitures de friction peuvent être utilisées dans les freins à disques précités sur des véhicules tels que véhicules automobiles courants ou de compétition.

L'invention sera mieux comprise à l'aide de la description et des dessins ci-après oú les mêmes références représentent les mêmes éléments et dans lesquels

les figures 1a, 1b représentent un mode de réalisation non limitatif de l'objet de l'invention,

les figures 2a, 2b représentent en coupe un détail de réalisation de l'invention, et

la figure 3 représente une variante de réalisation de l'objet de l'invention dans le cas d'une garniture de friction du type sabot pour frein à tambour.

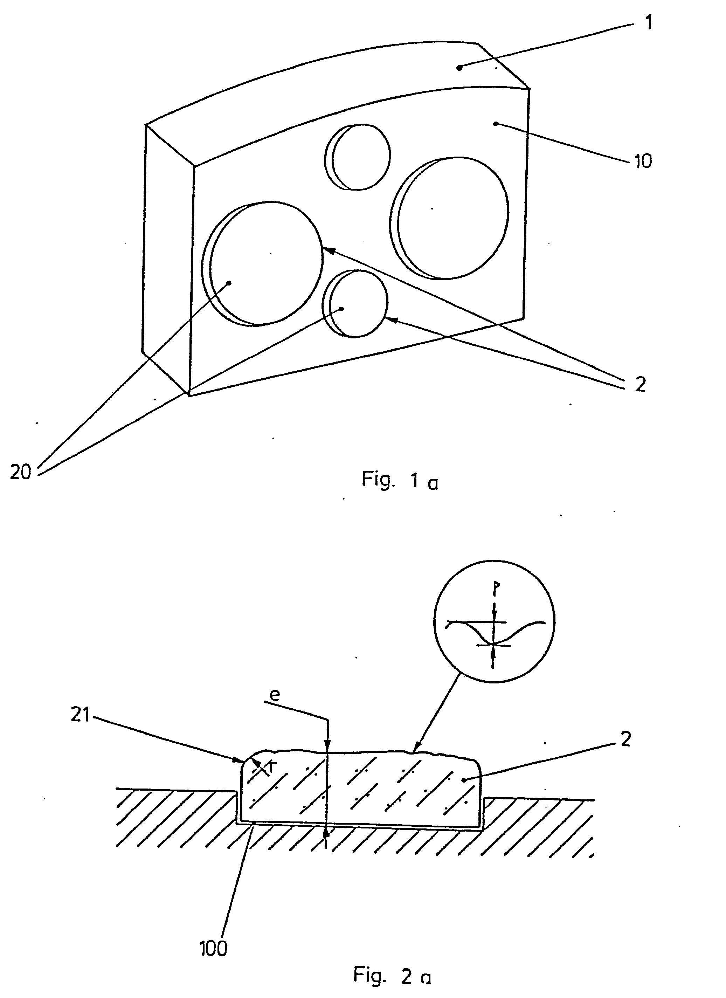

Selon la figure 1a, la garniture de friction pour frein à friction comprend une pièce support 1 comportant au moins une zone de frottement 2 en matériau dur. Par matériau dur on entend tout matériau présentant au test de dureté selon le procédé Vickers un coefficient de dureté supérieur à environ 1200.

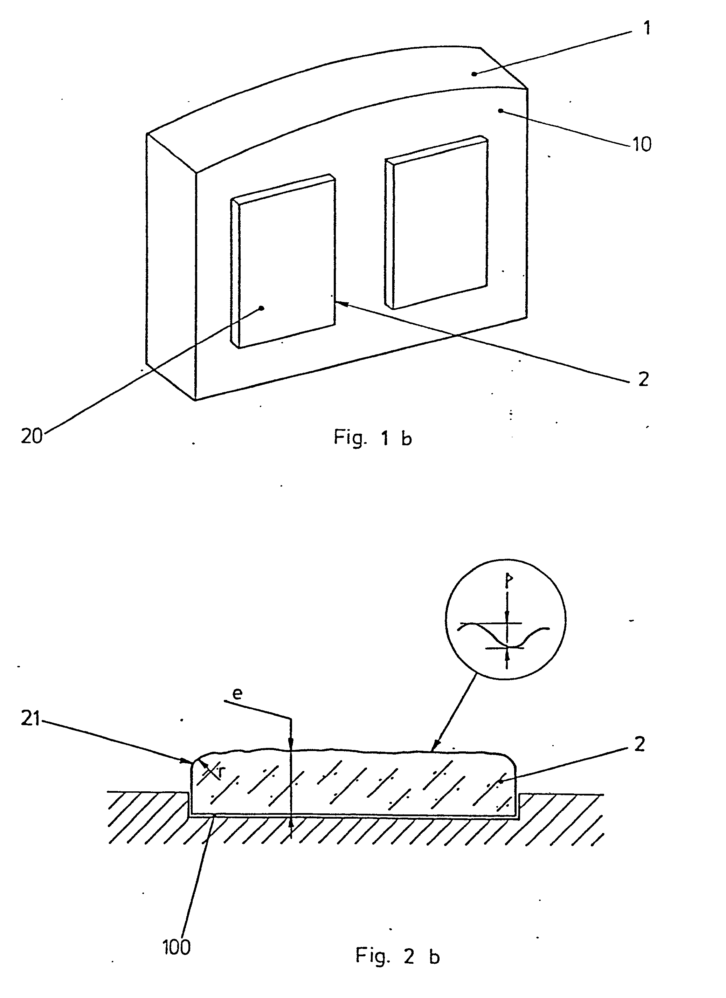

Ainsi que représenté de manière non limitative, figure 1a, 1b dans le 25 cas d'une garniture de friction pour frein à disque, la pièce support 1 comprend au moins une surface plane 10. La surface plane 10 comporte une pluralité de zones de frottement 2 en matériau dur.

Les zones de frottement 2 sont disposées sensiblement dans un même plan, les zones de frottement 2 étant au cours du freinage appliquées contre la face correspondante du disque.

Selon un mode de réalisation non limitatif de l'invention, la plaquette support 1 est constituée par une plaquette métallique par exemple et le matériau dur est constitué par du corindon synthétique monocristallin. De préférence les zones de frottement 2 sont constituées par des pastilles fixées sur la surface plane 10 de la plaquette support. Les pastilles de corindon sont, par exemple, obtenues par sciage d'un barreau de corindon monocristallin obtenu, par exemple, par le procédé Verneuil. De préférence le barreau obtenu a son axe optique perpendiculaire à l'axe de croissance de barreau et les pastilles obtenues par sciage, de forme sensiblement cylindrique, comportent deux faces planes parallèles à l'axe optique. Le coefficient de dureté de chacune de ces faces est alors de l'ordre de 2200 selon le procédé Vickers, l'une de ces faces étant destinée à constituer une zone de frottement 2 de la garniture.

Le corindon peut consister en un monocristal d'alumine pure saphir blanc, ou un monocristal d'alumine $Al_2O_3$ + oxyde de chrome, rubis rouge, ou monocristal d'alumine + fer et titane, saphir bleu, par exemple.

Le corindon monocristallin permet, compte tenu de l'état de surface de la zone de frottement 2, d'obtenir un coefficient de frottement à sec sur une surface d'acier poli pouvant varier entre 0,08 et 0,4 selon les états de surface respectifs.

Par exemple chaque pastille de section sensiblement circulaire comporte une face plane 20, constituant une zone de frottement, ayant une rugosité moyenne p de 2 à 3 µm. Un tel état de surface pour des pastilles de l'ordre de 20 mm de diamètre permet, compte tenu d'un coefficient de frottement moyen de 0,3 sur l'acier poli, une efficacité de freinage convenable, les surfaces des pastilles obtenues après sciage étant maintenues brutes. De manières inattendue, le corindon est ainsi utilisé comme matériau de friction, l'utilisation antérieur bien connue des propriétés du corindon comme matériau antifriction, notamment dans les paliers d'horlogerie, étant due à la seule qualité de dureté exceptionnelle de ce matériau permettant, pour un état de surface d'excellente qualité de rugosité p inférieure à 0,05 µm et une surface de contact avec un pivot d'acier réduite au maximum, un couple de frottement de valeur minime, constant dans le temps, du fait de l'absence d'affinité corindon - métal et d'usure correspondante. Ainsi que représenté figure 2a, 2b les pastilles ont de préférence une épaisseure de l'ordre de 1 à 4 mm et chaque pastille présente une arête libre 21 constituant le bord d'attaque de chaque zone de freinage, formée par une surface gauche de section sensiblement circulaire. Le rayon de courburer de la section circulaire formant l'arête libre est par exemple voisin de 1/10 de millimètre et permet d'éviter les détériorations des arêtes et du disque lors de l'utilisation en cas de léger défaut de parallèlisme entre garniture et disque. L'arrondi de l'arête vive peut être obtenu par tout procédé classique de façonnage du corindon.

Les pastilles de corindon 2 sont fixées à la plaquette support par collage, par exemple dans des logements 100 ménagés à cet effet dans la plaquette support, ou par sertissage dans ces logements.

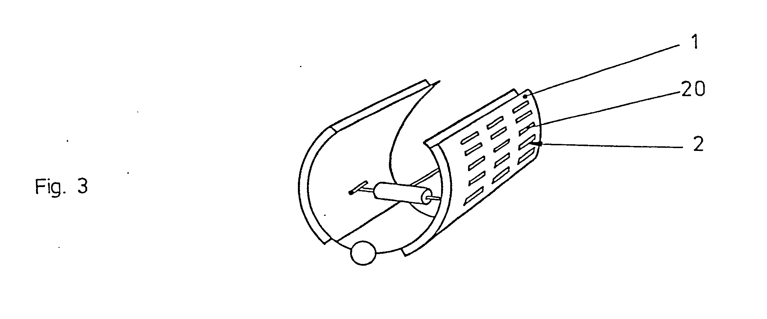

Selon la variante de réalisation représentée figure 3, dans le cas d'un frein à tambour, la pièce support 1 constituée par une section sensiblement hémicylindrique constituant le sabot comprend une pluralité de zones de frottement en matériau dur 2. De préférence les zones de frottement 2 sont sensiblement réparties selon des génératrices de la pièce support 1. Les zones de frottement 2 sont par exemple constituées par des pastilles de corindon de forme rectangulaire, les pastilles étant disjointes et réparties par exemple de manière que la grande dimension des pastilles rectangulaires soit parallèle aux génératrices de la pièce support hémicylindrique. Le fait que les zones de frottement soient disjointes permet au cours du fonctionnement une meilleure ventilation des zones de frottement, tant dans le cas des garnitures pour frein à tambour que pour les garnitures de frein à disque.

Des pastilles de corindon de forme rectangulaire peuvent également être utilisées comme représenté figure 1b. La plaquette support 1 peut avantageusement, sans sortir du cadre de l'invention, être constituée par une plaquette de frein de type classique constituée par des fibres organiques dans laquelle sont pratiqués les logements destinées à recevoir les pastilles de corindon. L'affleurement de chaque zone de frottement 20 par rapport à la surface de la plaquette support peut être alors choisi voisin de 0,1 à 0,5 mm la surface de la plaquette pouvant ainsi jouer le rôle d'agent de nettoyage du disque, vis-à-vis des particules de de silice ou autre de dimension supérieure à cet affleurement, projetées par la rotation des roues du véhicule.

Un essai de garnitures de frein conformes à l'invention effectué pour des freins à disques d'automobiles a permis de constater après un essai sur 30 000 km l'absence d'usure appréciable tant des garnitures de frein que du disque lui-même, les garnitures de frein selon l'invention pouvant être avantageusement utilisés avec tout type de disque de frein et y compris avec des disques de frein ventilés comportant soit des ouvertures, soit des ailettes ou susceptibles de dissiper la majeure partie de la chaleur provoquée par la dégradation de l'énergie cinétique du véhicule au cours du freinage.

## Revendications

1. Garniture de friction pour frein à friction comportant une pièce support (1) comprenant une surface (10) munie d'une pluralité de zones de frottement (20) en matériau dur, caractérisée en ce que les zones de frottement sont constituées par des pastilles de corindon monocristallin (2) fixées sur la surface de la pièce support, chaque pastille comportant une face plane constituant une zone de frottement, chaque face plane ayant une rugosité moyenne de 2 à 3 µm.

2. Garniture de friction selon la revendication 1, caractérisée en ce que chaque pastille est de section circulaire.

3. Garniture de friction selon l'une des revendications 1 ou 2, caractérisée en ce que chaque pastille présente une arête libre (21), constituant le bord d'attaque de chaque zone de frottement, formée par une surface gauche de section droite sensiblement circulaire, le rayon de courbure de la section circulaire formant l'arête libre étant voisin de ¹/₁₀ de millimètre.

4. Garniture de friction selon la revendication 1, caractérisée en ce que, dans le cas d'un frein à tambour, la pièce support (1) constituée par une section sensiblement hémicylindrique constituant le sabot comporte une pluralité de zones de frottement (20) en matériau dur, lesdites zones étant sensiblement réparties selon des génératrices de la pièce support.

5. Garniture de friction selon la revendication 4, caractérisée en ce que lesdites zones de frottement sont constituées par des pastilles de corindon (2) de forme rectangulaire sensiblement réparties selon des génératrices de la pièce support, lesdites pastilles étant disjointes.

## Claims

1. A friction lining for a friction brake, comprising a supporting element (1) having a surface (10) provided with a plurality of friction areas (20) of hard material, characterized in that the friction areas consist of monocrystalline corundum pads (2) secured to the surface of the supporting element, each pad having a plane surface forming one friction area, each plane surface having a mean rugosity of 2 to 3 µm.

2. A friction lining as in claim 1, characterized in that each pad is of circular shape.

3. A friction lining as in either of claims 1 and 2, characterized in that each pad has a free edge (21), constituting the active edge of each friction area, formed by a surface of substantially circular cross-section, the radius of curvature of the free edge being about 0,1 mm

4. A friction lining as in claim 1 for use in a drum brake, characterized in that the supporting element (1) is of substantially hemicylindrical cross-section to form a brake shoe and comprises a plurality of friction areas (20) of hard material, said areas being distributed substantially along generating lines of the supporting element.

5. A friction lining as in claim 4, characterized in that said friction areas are formed by corundum pads (2) of substantially rectangular shape distributed along generating lines of the supporting element, said pads being disjoined.

## Patentansprüche

1. Reibungsbelag für Reibungsbremse mit einem Supportteil (1), umfassend eine mit einer Mehrzahl von Reibungszonen (20) aus Hartmaterial versehene Oberfläche (10), dadurch gekennzeichnet, dass die Reibungszonen von Plättchen aus monokristallinem Korund (2) gebildet sind, die auf der Oberfläche des Supportteils befestigt sind, wobei jedes Plättchen eine ebene, eine Reibungszone bildende Seite aufweist und jede ebene Seite eine mittlere Rauhtiefe von 2 bis 3 µm besitzt.

2. Reibungsbelag nach Anspruch 1, dadurch gekennzeichnet, dass jedes Plättchen runden Querschnitt aufweist.

3. Reibungsbelag nach Anspruch 1 oder 2, dadurch gekennzeichnet, dass jedes Plättchen eine freie Begrenzung (21) aufweist, die die Angriffskante jeder Reibungszone bildet, gebildet von einer gekrümmten Fläche mit im wesentlichen kreisförmigem Querschnitt, wobei der Krümmungsradius des kreisförmigen Querschnitts, der die freie Begrenzung bildet, in der Nähe von ¹/₁₀ Millimeter liegt.

4. Reibungsbelag nach Anspruch 1, dadurch gekennzeichnet, dass im Falle einer Trommelbremse das Supportteil (1), gebildet von einem im wesentlichen halbzylindrischen Abschnitt, der den Bremsschuh bildet, eine Mehrzahl von Reibungszonen (20) aus hartem Material aufweist, wobei diese Zonen im wesentlichen längs der Mantellinien des Supportteils verteilt sind.

5. Reibungsbelag nach Anspruch 4, dadurch gekennzeichnet, dass die Reibungszonen von Korundplättchen (2) in Rechteckform gebildet sind, die im wesentlichen längs der Mantellinien des Supportteils voneinander getrennt angeordnet sind.

Fig. 1 a

Fig. 2 a

1

10

2

20

Fig. 1 b

e

21

2

100

Fig. 2 b

Fig. 3